(19) Europäisches Patentamt
European Patent Office
Office européen des brevets

(11) **EP 1 725 439 B1**

(12) **EUROPÄISCHE PATENTSCHRIFT**

(45) Veröffentlichungstag und Bekanntmachung des Hinweises auf die Patenterteilung:
**30.12.2015 Patentblatt 2015/53**

(51) Int Cl.:
***B62D 6/00*** *(2006.01)* ***B60T 8/175*** *(2006.01)*
***B60T 8/1755*** *(2006.01)*

(21) Anmeldenummer: **05717036.7**

(22) Anmeldetag: **15.03.2005**

(86) Internationale Anmeldenummer:
**PCT/EP2005/051158**

(87) Internationale Veröffentlichungsnummer:
**WO 2005/087562 (22.09.2005 Gazette 2005/38)**

(54) **VERFAHREN ZUM ERHÖHEN DER FAHRSTABILITÄT EINES FAHRZEUGS**

METHOD FOR INCREASING THE DRIVING STABILITY OF A MOTOR VEHICLE

PROCEDE POUR RENFORCER LA TENUE DE ROUTE D'UN VEHICULE

(84) Benannte Vertragsstaaten:
**DE FR**

(30) Priorität: **16.03.2004 DE 102004012685**

(43) Veröffentlichungstag der Anmeldung:
**29.11.2006 Patentblatt 2006/48**

(73) Patentinhaber: **Continental Teves AG & Co. oHG**
**60488 Frankfurt (DE)**

(72) Erfinder:
• **BAUER, Urs**
**60486 Frankfurt am Main (DE)**
• **ROLL, Georg**
**63150 Heusenstamm (DE)**

• **SCHAFIYHA, Schahrad**
**65929 Frankfurt am Main (DE)**
• **CAPELLARO, Stephan**
**61440 Oberursel-Oberstedten (DE)**
• **GILLE, Michael**
**69198 Schriesheim (DE)**
• **MUNTU, Matthias**
**60486 Frankfurt/Main (DE)**

(56) Entgegenhaltungen:
EP-A- 0 992 373    WO-A-2004/005093
DE-A1- 3 916 354    DE-A1- 10 155 938
US-A- 5 482 133    US-A1- 2002 198 646

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 725 439 B1

**Beschreibung**

Die Erfindung betrifft ein Verfahren zum Erhöhen der Stabilität eines Fahrzeugs beim Beschleunigen auf einer Fahrbahn mit einem inhomogenen Reibwert, wobei ein Antriebsrad auf einer Niedrigreibwertseite durch eine Antriebsschlupfregelung mit einer Bremskraft beaufschlagt wird.

Die Erfindung betrifft zudem eine zur Durchführung des Verfahrens geeignete Anordnung.

Beim Beschleunigen eines Fahrzeugs kann es insbesondere auf einer Fahrbahn mit einem niedrigen Reibwert zu einem Überdrehen der Antriebsräder kommen, wodurch die von den Reifen übertragbare Seitenführungskraft herabgesetzt wird. Die Folge ist eine Destabilisierung des Fahrzeugs, die beispielsweise bei Fahrzeugen mit Heckantrieb zu einem Übersteuern bei einer Kurvenfahrt führen kann.

Moderne Fahrzeuge verfügen daher über Regelsysteme, die den Radschlupf an den überdrehenden Antriebsrädern durch Bremseneingriffe auf einen für die Gewährleistung der Traktion notwendigen Wert reduzieren, so dass den Rädern ein größeres Antriebsmoment aufgegeben und die von den Reifen übertragbare Seitenführungskraft erhöht wird. Diese Regelsysteme werden als Antriebsschlupfregelungen (ASR) bezeichnet. Ferner sind die Bezeichnungen "Elektronische Differentialsperre (EDS)", "Automatische Stabilitätskontrolle (ASC)" oder "Traction Control System (TCS)" gebräuchlich.

In einer $\mu$-Split-Situation, d.h. bei Vorliegen eines inhomogenen Reibwertes der Fahrbahn, wird bei einem ASR-Eingriff das Antriebsrad auf der Niedrigreibwertseite abgebremst. Aufgrund der Wirkung des Ausgleichsgetriebes (Differenzial) der Antriebsachse erhöht sich damit die Antriebskraft auf der Hochreibwertseite gegenüber der Antriebskraft auf der Niedrigreibwertseite, und es entsteht ein auf das Fahrzeug wirkendes Störgiermoment. Dieses kann zu einem Ausbrechen bzw. Eindrehen des Fahrzeugs in Richtung der Niedrigreibwertseite führen, wenn an den Reifen nicht genügend Seitenführungskraft zur Abstützung der durch das Störgiermoment hervorgerufenen Querkräfte aufgebaut werden kann.

Aus der DE 3916 354 A1 ist ein Lenkungsregelsystem bekannt, das beim Erkennen einer $\mu$-Split-Bedingung einen automatischen Lenkeingriff in die Hinterachse vornimmt, um das Spurhalten des Fahrzeugs zu stabilisieren.

Der Erfindung liegt daher die Aufgabe zugrunde, das Fahrzeug bei einem ASR-Eingriff in einer $\mu$-Split-Situation besser zu stabilisieren.

Erfindungsgemäß wird diese Aufgabe durch ein Verfahren mit den Merkmalen des Patentanspruchs 1 gelöst.

Erfindungsgemäß wird diese Aufgabe zudem durch eine Anordnung mit den Merkmalen des Patentanspruchs 14 gelöst.

Zweckmäßige Weiterbildungen der Erfindung sind in den Unteransprüchen angegeben.

Das erfindungsgemäße Verfahren zum Erhöhen der Stabilität eines Fahrzeugs beim Beschleunigen auf einer Fahrbahn mit einem inhomogenen Reibwert, wobei ein Antriebsrad auf einer Niedrigreibwertseite durch eine Antriebsschlupfregelung mit einer Bremskraft beaufschlagt wird, zeichnet sich dadurch aus, dass eine Größe ermittelt wird, die der durch die Antriebsschlupfregelung eingestellten Bremskraft entspricht, dass die ermittelte Größe zur Bestimmung eines Störgiermoments herangezogen wird und dass in Abhängigkeit von dem Störgiermoment ein Steueranteil eines Zusatzlenkwinkels ermittelt wird.

Bei dem erfindungsgemäßen Verfahren wird, wenn die Antriebsschlupfregelung in einer $\mu$-Split-Situation aktiv ist, ein Zusatzlenkwinkel ermittelt, mit dem ein Giermoment aufgebaut werden kann, welches das durch die unterschiedlichen Antriebskräfte auf der Hoch- und der Niedrigreibwertseite hervorgerufene Störgiermoment kompensiert. Der Zusatzlenkwinkel wird dabei in Abhängigkeit von dem Störgiermoment ermittelt, was einer Vorsteuerung bzw. Störgrößenkompensation im Sinne der Regelungstheorie entspricht.

Damit kann dem Eindrehen des Fahrzeugs frühzeitig durch ein Einstellen des ermittelten Zusatzlenkwinkels entgegengewirkt werden, so dass der Fahrzeugführer nicht gegenzulenken und/oder das Antriebsmoment zu verringern braucht bzw. kein ESP-Eingriff zur Fahrzeugstabilisierung notwendig wird. Ferner werden aufgrund des Störgiermoments auf die Räder wirkende Querkräfte abgebaut, so dass sich das zur Verfügung stehende Seitenführungskraftpotenzial und damit die Stabilität des Fahrzustandes des Fahrzeugs erhöhen. Das Fahrzeug ist damit bei einem Anfahrvorgang auf einer Fahrbahn mit inhomogenem Reibwert einfacher, sicherer und komfortabler steuerbar.

Der erfindungsgemäßen Bestimmung des Störgiermoment liegt die Erkenntnis zugrunde, dass die auf der Hochreibwertseite wirkende Antriebskraft bei einem ASR-Eingriff in einer $\mu$-Split-Situation gegenüber der auf der Niedrigreibwertseite wirkenden Antriebskraft um einen Betrag erhöht ist, welcher der Bremskraft an dem abgebremsten Rad auf der Niedrigreibwertseite entspricht. Dies ergibt sich aus der Funktion des Differenzials der Antriebsachse, das für eine Gleichverteilung des Antriebsmoments auf die Antriebsräder sorgt. Wird dabei ein Antriebsrad abgebremst, so überträgt das Differenzial den dem Bremsmoment entgegenwirkenden Anteil des Antriebsmoments auf das ungebremste Rad, an dem dieser Anteil dann eine zusätzliche Antriebskraft bewirkt.

Erfindungsgemäß ist es dabei vorgesehen, dass die Bremskraft an dem bei dem ASR-Eingriff abgebremsten Rad aus einem Bremsdruck in der Radbremse des Antriebsrades auf der Niedrigreibwertseite bestimmt wird.

Es ist dabei vorgesehen, dass der Steueranteil des Zusatzlenkwinkels anhand eines Regelungsgesetzes der

Form

$$\Delta\delta_Z = K_M\left(v\right)\cdot \hat{M}_Z$$

berechnet wird, wobei $\Delta\delta_Z$ den Steueranteil des Zusatzlenkwinkels, $K_M$ einen Verstärkungsfaktor, $v$ die Referenzge-schwindigkeit des Fahrzeugs und $\hat{M}_Z$ einen Schätzwert für das Störgiermoment bezeichnet.

Insbesondere wird hierbei der Verstärkungsfaktor im Sinne einer adaptiven Regelung an die Fahrzeugreferenzgeschwindigkeit angepasst.

In einer bevorzugten Ausführungsform der Erfindung ist es vorgesehen, dass der Zusatzlenkwinkel an wenigstens einem lenkbaren Rad des Fahrzeugs eingestellt wird.

In einer weiteren bevorzugten Ausführungsform der Erfindung ist es vorgesehen, dass in Abhängigkeit von dem Zusatzlenkwinkel ein Zusatzlenkmoment bestimmt wird und ein Lenkstrang des Fahrzeugs mit dem Zusatzlenkmoment beaufschlagt wird.

Somit wird der Zusatzlenkwinkel entweder unmittelbar durch einen Aktuator an dem lenkbaren Rad des Fahrzeugs eingestellt, oder der Fahrzeugführer wird durch ein Zusatzlenkmoment dabei unterstützt, einen Zusatzlenkwinkel einzustellen, der sich vorzugsweise aus der Summe des momentan von dem Fahrer kommandierten Lenkwinkels und des Zusatzlenkwinkels ergibt.

Vorteilhaft ist es vorgesehen, dass in Abhängigkeit von einer Regelabweichung zwischen einer mittels Fahrzeugsensoren gemessenen oder aus Messsignalen von Fahrzeugsensoren berechneten Regelgröße und einer Referenzgröße ein Regelanteil des Zusatzlenkwinkels ermittelt wird, und dass der Zusatzlenkwinkel einer Summe aus dem Regelanteil und dem Steueranteil entspricht.

Hierdurch können auch nach der Vorsteuerung anhand des Steueranteils des Zusatzlenkwinkels verbleibende Regelabweichungen des Fahrzeugverhaltens korrigiert werden, so dass eine besonders zuverlässige Stabilisierung des Fahrzeugs gewährleistet ist.

In einer bevorzugten Ausführungsform der Erfindung ist es dabei vorgesehen, dass der Regelanteil des Zusatzlenkwinkels in Abhängigkeit von einer Gierratenabweichung zwischen der Gierrate des Fahrzeugs und einer Referenzgierrate des Fahrzeugs bestimmt wird, wobei die Referenzgierrate anhand wenigstens einer von dem Fahrzeugführer vorgegebenen Größe, vorzugsweise dem von dem Fahrzeugführer kommandierten Lenkwinkel, mittels eines Fahrzeugmodells bestimmt wird.

Vorzugsweise ist es dabei vorgesehen, dass der Regelanteil des Zusatzlenkwinkels anhand eines Regelungsgesetzes der Form

$$\Delta\delta_R = K_{FB,P}\left(v\right)\cdot \Delta\dot{\psi} + K_{FB,I}\left(v\right)\cdot \Delta\psi + K_{FB,D}\left(v\right)\cdot \Delta\ddot{\psi}$$

bestimmt wird, wobei $\Delta\delta_R$ den Regelanteil des Zusatzlenkwinkels, $K_{FB,P}$, $K_{FB,I}$ und $K_{FB,D}$ jeweils einen Verstärkungsfaktor, $v$ die Referenzgeschwindigkeit des Fahrzeugs, $\Delta\dot{\psi}$ die Gierratenabweichung, $\Delta\psi$ eine Gierwinkelabweichung und $\Delta\ddot{\psi}$ eine Gierbeschleunigungsabweichung bezeichnet.

Dies entspricht vorteilhaft der Regelstrategie eines Proportional-Differenzial-Reglers, die eine besonders schnelle Reaktion des Regelungssystems auf Gierratenabweichungen ermöglicht. Ferner erfolgt auch hier mit Vorteil eine Adaption der Verstärkungsfaktoren an die Fahrzeuggeschwindigkeit.

In einer weiteren bevorzugten Ausführungsform der Erfindung ist es vorgesehen, dass der Regelanteil des Zusatzlenkwinkels in Abhängigkeit von einer Schwimmwinkelabweichung zwischen einem geschätzten Schwimmwinkel des Fahrzeugs und einem Referenzschwimmwinkel ermittelt wird, wobei der Referenzschwimmwinkel durch einen Schwellenwert vorgegebenen wird.

In einer weiteren bevorzugten Ausführungsform der Erfindung ist es vorgesehen, dass der Regelanteil des Zusatzlenkwinkels in Abhängigkeit von einer Querbeschleunigungsabweichung zwischen einer gemessenen Querbeschleunigung des Fahrzeugs und einer Referenzquerbeschleunigung ermittelt wird, wobei die Referenzquerbeschleunigung durch einen Schwellenwert vorgegeben wird.

In einer bevorzugten Ausführungsform der Erfindung ist es vorgesehen, dass der Zusatzlenkwinkel mittels einer Steer-by-Wire-Lenkung eingestellt wird.

In einer weiteren bevorzugten Ausführungsform der Erfindung ist es vorgesehen, dass der Zusatzlenkwinkel mittels einer Überlagerungslenkung eingestellt wird.

Vorzugsweise wird dabei zusätzlich zu der von dem Fahrzeugführer kommandierten Lenkbewegung eine weitere Lenkbewegung nach Maßgabe des Zusatzlenkwinkels ausgeführt.

In einer vorteilhaften Ausführungsform der Erfindung ist es ferner vorgesehen, dass das Zusatzlenkmoment mittels einer elektrischen oder hydraulischen Servolenkung eingestellt wird.

In einer weiteren vorteilhaften Ausführungsform der Erfindung ist es vorgesehen, dass das Zusatzlenkmoment mittels einer Steer-by-Wire-Lenkung eingestellt wird.

Die erfindungsgemäße Anordnung zum Erhöhen der Stabilität eines Fahrzeugs bei einem Beschleunigen auf einer Fahrbahn mit einem inhomogenen Reibwert, umfassend ein Regelungsmittel zur Durchführung einer Antriebsschlupfregelung, welches eine Beaufschlagung eines Antriebsrads auf einer Niedrigreibwertseite mit einer Bremskraft steuert, zeichnet sich dadurch aus, dass sie eine Ermittlungseinheit zum Ermitteln einer Größe enthält, wobei die Größe der durch das Regelungsmittel eingestellten Bremskraft entspricht, dass sie eine Schätzeinheit zum Schätzen eines Störgiermoments unter Heranziehung der ermittelten Größe enthält und dass sie eine Steuerungseinheit zum Ermitteln eines Steueranteils eines Zusatzlenkwinkels in Abhängigkeit von dem geschätzten Störgiermoment enthält.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Figuren.

Von den Figuren zeigt

Fig. 1a    eine Skizze zur Veranschaulichung der bei einem ASR-Bremseneingriff in einer $\mu$-Split-Situation an den Antriebsrädern wirkenden Antriebskräfte,

Fig. 1b    eine Skizze zur Veranschaulichung der Entstehung eines Störgiermoments bei einem ASR-Bremseneingriff in einer $\mu$-Split-Situation,

Fig. 2    ein Blockschaltbild eines Lenkwinkelreglers,

Fig. 3    ein Blockschaltbild eines Blocks des in der Figur 2 dargestellten Lenkwinkelreglers, in dem ein Steueranteil des Zusatzlenkwinkels bestimmt wird und

Fig. 4    ein Blockschaltbild eines Blocks des in der Figur 2 dargestellten Lenkwinkelreglers, in dem ein Regelanteil des Zusatzlenkwinkels bestimmt wird.

Es wird beispielhaft von einem zweiachsigen, vierrädrigen Fahrzeug mit Heckantrieb und Frontlenkung ausgegangen, das über eine hydraulische Bremsanlage verfügt. Die Erfindung ist jedoch ebenso in Fahrzeugen mit Frontantrieb oder mit Allradantrieb einsetzbar. Ferner kann es sich bei der Lenkung auch um eine Hecklenkung handeln, bei der die Hinterräder des Fahrzeugs lenkbar ausgeführt sind.

Das Fahrzeug umfasst ein Regelsystem zur Antriebsschlupfregelung (ASR), das den Radschlupf beim Beschleunigen durch eine Beaufschlagung der Radbremsen der Antriebsräder mit einem Bremsdruck auf einen vorgegebenen Wert begrenzt, bei dem eine ausreichende Traktion der Antriebsräder sichergestellt ist. Insbesondere verfügt das Fahrzeug dabei über die dafür notwendige, dem Fachmann bekannte Sensorik, wie beispielsweise über Raddrehzahl- und Bremsdrucksensoren, über Aktuatoren, wie beispielsweise eine steuerbare Druckversorgung und steuerbare Ventile an den Radbremszylindern sowie über ein oder mehrere Steuergeräte zur Steuerung der Aktuatoren.

Die Antriebsräder 110, 120 an der Hinterachse des Fahrzeugs sind über ein Differenzial 130 miteinander verbunden, das eine Aufteilung des Antriebsmoments auf die Räder im Verhältnis 1:1 bewirkt. Unter dem Antriebsmoment wird dabei das auf das Antriebsrad wirkende Drehmoment verstanden, dem ein Moment gleichen Betrags entgegenwirkt, das durch an der Reifenaufstandsfläche angreifende Längskräfte verursacht wird. D.h. es handelt sich um das abgestützte Antriebsmoment.

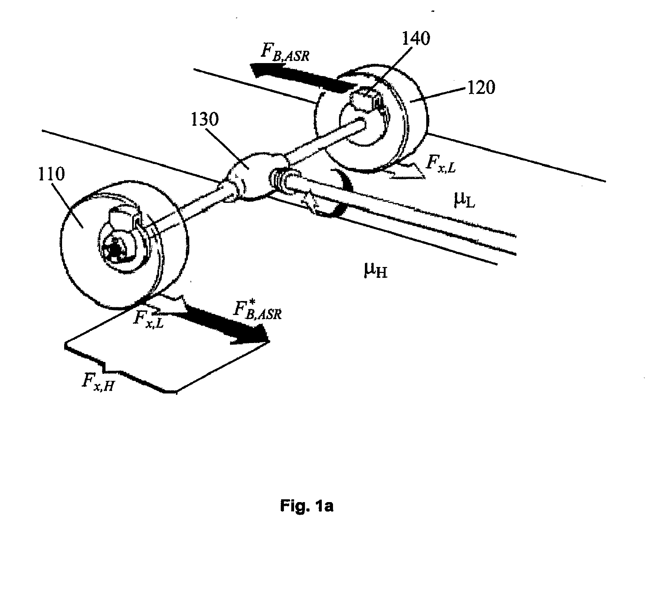

Wie in der Figur 1a veranschaulicht, wird aufgrund der Wirkung des Differenzials 130 das Antriebsmoment an dem Antriebsrad 110 auf der Seite mit dem größeren Reibwert $\mu_H$ auf den an dem Rad 120 auf der Seite mit dem kleineren Reibwert $\mu_L$ vorliegenden Wert begrenzt, so dass beide Räder 110, 120 die Antriebskraft $F_{x,L}$ übertragen. Ein darüber hinaus von dem Antriebsmotor des Fahrzeugs bereitgestelltes Drehmoment führt zu einem Überdrehen bzw. Durchdrehen des Rades 120 auf der Niedrigreibwertseite.

Zur Verringerung des Radschlupfes und zur Erhöhung der übertragbaren Längs- und Seitenführungskräfte an einem überdrehenden Antriebsrad 120 auf der Niedrigreibwertseite wird in diesem Fall die Radbremse 140 des Antriebsrades 120 durch einen ASR-Eingriff mit einem Bremsdruck beaufschlagt. An dem Rad wirkt damit bei dem Eingriff die Bremskraft $F_{B,ASR}$, die ein Drehmoment

$$M_{B,ASR} \; = \; r_B F_{B,ASR} \qquad\qquad\qquad (1)$$

zur Folge hat, wobei $r_B$ den Abstand zwischen dem Angriffspunkt der Bremskraft $F_{B,ASR}$ und der Drehachse des Antriebsrades 120 bezeichnet, der auch als effektiver Bremsscheibenradius bezeichnet wird.

Bei dem ASR-Eingriff wird somit zusätzlich das Moment $M_{B,ASR}$ an dem Antriebsrad 120 abgestützt, so dass sich aufgrund der oben beschriebenen Funktion des Differenzials 130 auch das Antriebsmoment an dem Antriebsrad 110 auf der Hochreibwertseite um den Betrag des Moments $M_{B,ASR}$ erhöht. Zusätzlich zu der Antriebskraft $F_{x,L}$ wird unter Vernachlässigung der Radbeschleunigung daher die Antriebskraft

$$F^{*}_{B,ASR} = 1/r_{dyn} \cdot M_{B,ASR} = r_{B}/r_{dyn} \cdot \left| F_{B,ASR} \right| \qquad (2)$$

durch das Antriebsrad 110 übertragen.

Die durch das Antriebsrad 110 übertragene Antriebeskraft kann jedoch gleichfalls auch unter Berücksichtigung der Radbeschleunigung $\dot{\omega}$ bestimmt werden. Dazu ergibt sich aus der Drallbilanz

$$J\dot{\omega} = M_{B,ASR} - F^{*}_{B,ASR} \cdot r_{dyn} \qquad (3)$$

des Antriebsrades 110 für die zusätzliche Antriebskraft

$$F^{*}_{B,ASR} = 1/r_{dyn} \cdot \left( M_{B,ASR} - J\dot{\omega} \right) = 1/r_{dyn} \cdot \left( r_{B} \cdot \left| F_{B,ASR} \right| - J\dot{\omega} \right) \qquad (4)$$

wobei $r_{dyn}$ der dynamische Reifenradius und $J$ das Trägheitsmoment des Rades ist.

Somit überträgt das Antriebsrad 110 auf der Hochreibwertseite die Antriebskraft

$$F_{x,H} = F_{x,L} + F^{*}_{B,ASR}, \qquad (5)$$

wohingegen das Antriebsrad 120 auf der Niedrigreibwertseite nur die Antriebskraft $F_{x,L}$ überträgt.

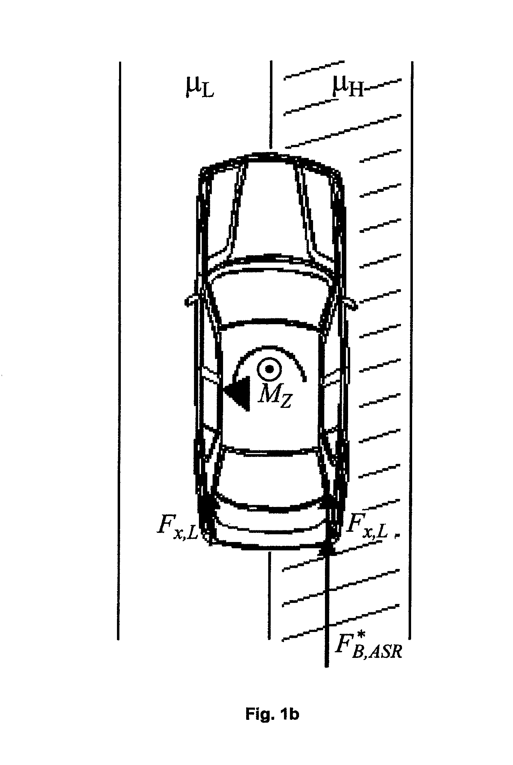

Durch die unterschiedlichen Antriebskräfte wird ein Störgiermoment $M_Z$ bewirkt, das, wie in der Figur 1b veranschaulicht, zu einem Eindrehen des Fahrzeugs in Richtung der Niedrigreibwertseite führen kann, wenn die von den Reifen übertragbare Seitenführungskraft nicht ausreichend groß ist, um die von dem Störgiermoment $M_Z$ hervorgerufenen Querkräfte zu kompensieren.

Bei gleichen in Fahrzeugquerrichtung gemessenen Abständen $s$ zwischen den Radaufstandsflächen des linken und des rechten Antriebsrades ergibt sich das Störgiermoment $M_Z$ in der folgenden Form aus der Differenz zwischen der Antriebskraft $F_{x,H}$ auf der Hochreibwertseite und der Antriebskraft $F_{x,L}$ auf der Niedrigreibwertseite, die hier durch Antriebskraft $F^{*}_{B,ASR}$ bzw. deren Betrag gegeben ist:

$$M_Z = \pm s \left( F_{x,H} - F_{x,L} \right) = \pm s \, \frac{r_B}{r_{dyn}} \left| F_{B,ASR} \right| \qquad (6)$$

Hierbei ist das positive (negative) Vorzeichen zu wählen, wenn die Hochreibwertseite auf der rechten (linken) Fahrzeuglängsseite liegt. In einer weiteren Ausführungsform der Erfindung, in der die Radbeschleunigung ebenfalls berücksichtigt wird, wird in die Gleichung 6 die Gleichung 5 in Verbindung Gleichung 4 eingesetzt, wobei die vorgenannte Vorzeichenkonvention erhalten bleibt.

Zur Stabilisierung des Fahrzustandes ist es in dieser Situation erfindungsgemäß vorgesehen, dass ein Zusatzlenkwinkel $\Delta\delta$ ermittelt wird, dessen Steueranteil $\Delta\delta_Z$ im Sinne einer Störgrößenkompensation bzw. Vorsteuerung bestimmt wird. Der Zusatzlenkwinkel $\Delta\delta$ wird dabei so berechnet, dass er ein Giermoment bewirkt, welches das Störgiermoment $M_Z$ kompensiert.

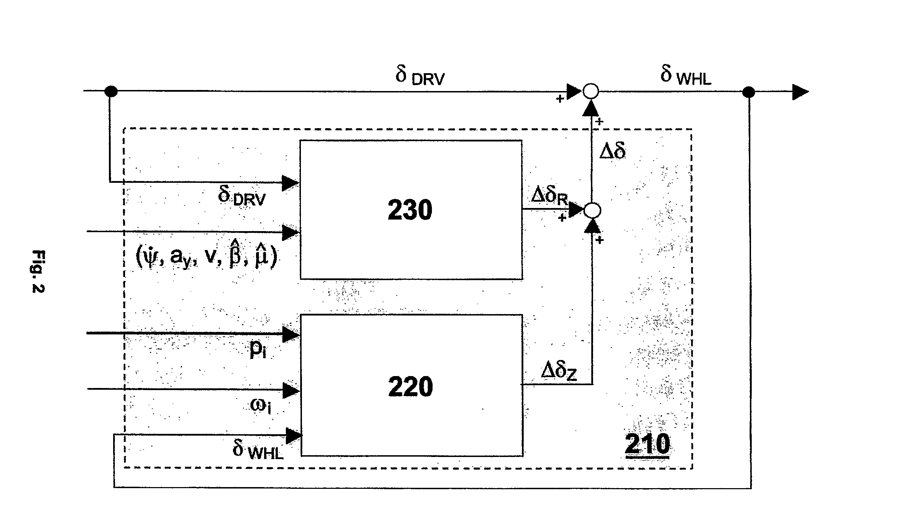

Zur Bestimmung des Zusatzlenkwinkels $\Delta\delta$ ist eine Regelungsanordnung 210 vorgesehen, die einen Bestandteil 220 zur Vorsteuerung und vorzugsweise einen weiteren Bestandteil 230 zur Fahrzustandsregelung umfasst. Eine bevorzugte Ausführungsform der Regelungsanordnung 210 ist in der Figur 2 anhand eines Blockschaltbilds veranschaulicht. Die Anordnung umfasst dabei einen Block 220, in dem ein Steueranteil $\Delta\delta_Z$ des Zusatzlenkwinkels $\Delta\delta$ bestimmt wird, der anhand eines geschätzten Wertes $\hat{M}_Z$ des Störgiermoments $M_Z$ ermittelt wird. Zusätzlich ist ein Fahrzustandsregler 230 vorgesehen, der einen Regelanteil $\Delta\delta_R$ des Zusatzlenkwinkels $\Delta\delta$ bestimmt, in dem weitere Störungen und insbesondere die Fahrzeugreaktion berücksichtigt werden. Der Zusatzlenkwinkel $\Delta\delta$, welcher als Zusatzlenkwinkelan-

forderung an das Aktuatorsystem der Lenkung übermittelt wird, ergibt sich als Summe aus dem Steueranteil $\Delta\delta_Z$ und dem Regelanteil $\Delta\delta_R$.

Die Regelungsanordnung 210 wird vorzugsweise aktiviert, wenn ein ASR-Bremseneingriff an einem Antriebsrad 120 erfolgt, bei dem der in der Radbremse 140 eingestellte Bremsdruck $p_{ASR}$ einen vorgegeben Schwellenwert überschreitet.

Um eine Beeinträchtigung einer Gierratenregelung (ESP) zu vermeiden, erfolgt die Aktivierung zudem nur dann, wenn kein ESP-Bremseneingriff vorgenommen wird. Dies ist in der Regel jedoch bereits dadurch sichergestellt, dass ASR-Eingriffe unterdrückt werden, wenn die ESP-Regelung aktiv ist.

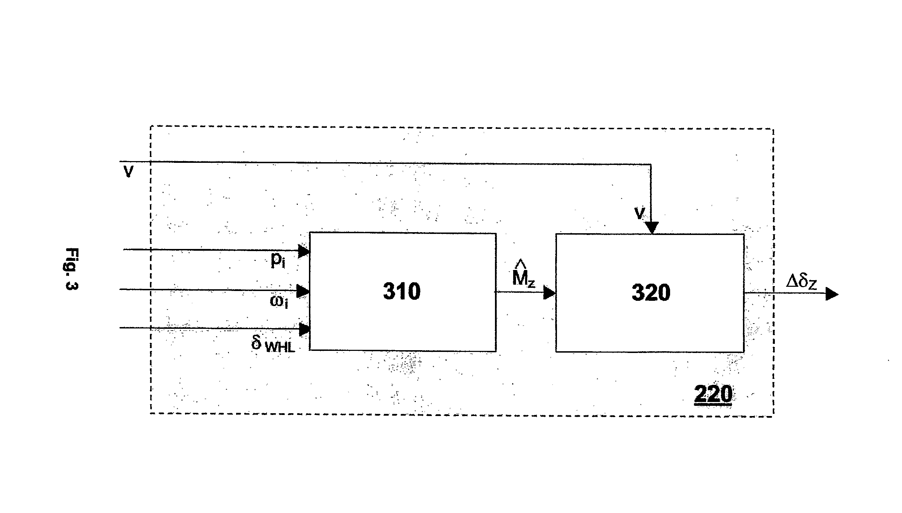

Eine bevorzugte Ausführungsform des Blocks 220 zum Bestimmen des Steueranteils $\Delta\delta_Z$ des Zusatzlenkwinkels $\Delta\delta$ ist in der Figur 3 dargestellt. Als Eingangssignale des Blocks 220 dienen die Bremsdrücke $p_i$ an den Radbremsen und die Referenzgeschwindigkeit $v$ des Fahrzeugs sowie optional der Lenkwinkel $\delta_{WHL}$ an den lenkbaren Rädern des Fahrzeugs und die Winkelgeschwindigkeiten $\omega_i$ der Räder des Fahrzeugs.

In dem Block 310 wird ein Schätzwert $\hat{M}$ des Störgiermoments $M_Z$ bestimmt. Dies geschieht vorzugsweise anhand der Gleichung 3, wobei die Bremskraft $F_{B,ASR}$ aus dem Bremsdruck $p_{ASR}$ ermittelt werden kann, der bei dem ASR-Eingriff in der Radbremse 140 des Antriebsrades 120 auf der Niedrigreibwertseite eingestellt wird. Hierbei können die Druckanforderungen des ASR-Steuergerätes zugrunde gelegt werden. Es kann jedoch ebenso eine Messung des Bremsdrucks $p_{ASR}$ mittels eines Drucksensors an der Radbremse 140 des Antriebsrades 120 auf der Niedrigreibwertseite vorgenommen werden.

Vorzugsweise wird ein linearer Zusammenhang zwischen dem Bremsdruck $p_{ASR}$ und der Bremskraft $F_{B,ASR}$ zugrunde gelegt, so dass gilt:

$$F_{B,ASR} = K_{pi} \cdot p_{ASR} \qquad (i = l, r) \qquad\qquad (7)$$

Die Proportionalitätskonstanten $K_{pi}$ für die Radbremsen am linken Antriebsrad (i = l) und am rechten Antriebsrad (i. = r) ergeben sich aus der Bremsengeometrie zu $K_{pi} = A\cdot C^*$ wobei $A$ die Bremskolbenfläche und $C^*$ der effektive Reibwert zwischen Bremsbelägen und Bremsschreibe bezeichnen. Die Proportionalitätskonstanten $K_{pi}$ sind dabei in der Regel für die Radbremsen des linken und des rechten Hinterrades gleich groß.

Gemäß Gleichung 6 ergibt sich hieraus der Schätzwert $\hat{M}_Z$ für das Störgiermoment in der Form

$$\hat{M}_Z = a_i K_{pi} p_{ASR} \frac{r_B}{r_{dyn}} \qquad (i = l, r) \qquad\qquad (8)$$

Dabei wird der Faktor $a_l$ = +1 verwendet, wenn der ASR-Bremseneingriff am linken Antriebsrad erfolgt, d.h. wenn die Niedrigreibwertseite auf der linken Fahrzeuglängsseite liegt, und es wird der Faktor $a_r$ = -1 verwendet, wenn der ASR-Bremseneingriff am rechten Antriebsrad erfolgt, d.h. wenn die Niedrigreibwertseite auf der rechten Fahrzeugseite liegt.

Wenn es sich bei den Antriebsrädern 110, 120 um lenkbare Räder des Fahrzeugs handelt, ist bei der Berechnung des Störgiermoments zusätzlich der momentane Lenkwinkel $\delta_{WHL}$ an den Rädern 110, 120 zu berücksichtigen, und die Gleichungen 6 und 8 sind entsprechend anzupassen, da sich aufgrund des Lenkwinkels der Hebelarm der Antriebskraftdifferenz verschiebt.

Der Steueranteil $\Delta\delta_Z$ des Zusatzlenkwinkels $\Delta\delta$ wird aus dem geschätzten Störgiermoment $\hat{M}_Z$ in einem inversen Fahrzeugmodell bestimmt, wobei vorzugsweise ein lineares Einspurmodell zugrunde gelegt und der in diesem Modell bestehende Zusammenhang zwischen dem Störgiermoment $M_Z$ und dem Lenkwinkel linearisiert wird (Prinzip der Störgrößenkompensation).

Demgemäß wird der Steueranteil $\Delta\delta_Z$ durch eine Multiplikation des geschätzten Störgiermoments $\hat{M}_Z$ mit einem Verstärkungsfaktor $K_M$ ermittelt:

$$\Delta\delta_Z = K_M \cdot \hat{M}_Z \qquad\qquad (9)$$

Es hat sich dabei gezeigt, dass dieser Zusammenhang Abhängigkeiten von der Fahrzeuggeschwindigkeit $v$ aufweist. Infolgedessen wird der Verstärkungsfaktor $K_M$ adaptiv in Abhängigkeit der Fahrzeuggeschwindigkeit $v$, beispielsweise anhand von Kennlinien bestimmt, die in Fahrversuchen ermittelt werden, und es gilt:

$$\Delta\delta_Z = K_M(v)\cdot\hat{M}_Z \qquad\qquad (10)$$

Ferner kann in dem Block 310 auch der Radschlupf des gebremsten Antriebsrades 120 anhand der Messsignale $\omega_i$ der Raddrehzahlsensoren ermittelt werden, um eine Plausibilitätsprüfung des ASR-Bremseneingriffs vorzunehmen.

Aufgrund von Ungenauigkeiten, die beispielsweise bei der Schätzung des Störgiermoments $M_Z$ auftreten und aufgrund möglicher überlagerter Störungen ist es anhand des Zusatzlenkwinkelanteils $\Delta\delta_Z$ nicht in jeder Fahrsituation möglich, das Störgiermoment $M_Z$ ideal zu kompensieren. Vor allem der Wert der nach Gleichung 4 berechneten Bremskraft $F_{B,ASR}$ ist dabei fehleranfällig, da Ungenauigkeiten bei der Bestimmung des Bremsdrucks $p_{ASR}$ in der Radbremse 140 auftreten können und die Auswirkungen einer Veränderung des Reibungskoeffizienten der Bremsbeläge, die aufgrund veränderter Betriebsbedingungen, wie beispielsweise einer veränderten Betriebstemperatur oder aufgrund einer zunehmenden Betriebsdauer auftreten können, nicht ausreichend berücksichtigt werden können.

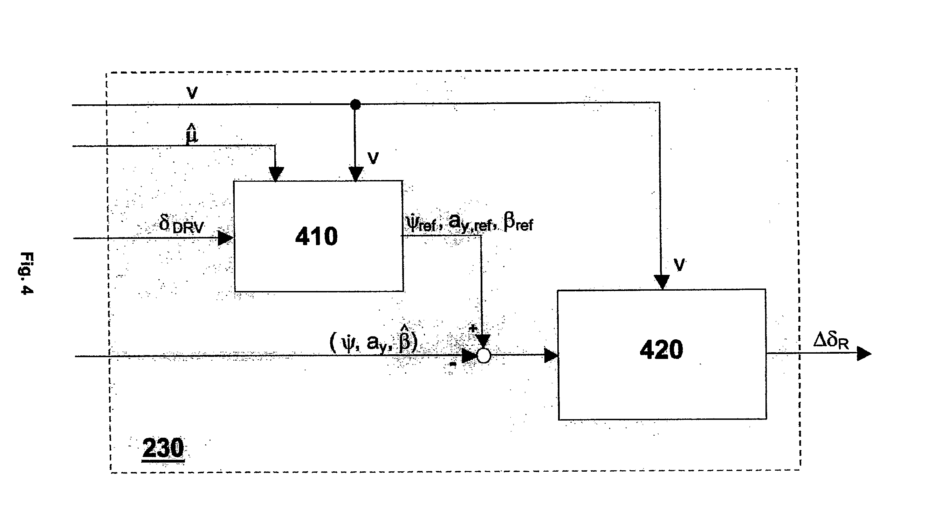

Daher wird der Störgrößenaufschaltung in dem Block 220, wie in Figur 2 dargestellt, eine Fahrzustandsregelung in dem Block 230 überlagert. In dem Block 230 wird, abhängig von Fahrzustandsgrößen, wie beispielsweise der Gierrate $\dot{\psi}$ des Fahrzeugs und optional zusätzlich auch abhängig von der Querbeschleunigung $a_y$ oder dem Schwimmwinkel $\beta$ des Fahrzeugs, ein Regelanteil $\Delta\delta_R$ des Zusatzlenkwinkels $\Delta\delta$ bestimmt. Eine bevorzugte Ausführungsform des Blocks 230 ist dabei in der Figur 4 als Blockschaltbild dargestellt.

Der Regelanteil $\Delta\delta_R$ basiert insbesondere auf dem Gierverhalten des Fahrzeugs. Zur Auswertung des Gierverhaltens wird in dem Block 410 in einem Fahrzeugmodell eine Referenzgierrate $\dot{\psi}_{ref}$ anhand des von dem Fahrer kommandierten Lenkwinkels $\delta_{DRV}$ und anhand der Fahrzeugreferenzgeschwindigkeit $v$ ermittelt. Dies geschieht unter Verwendung eines Referenzmodells des Fahrzeugs, wobei beispielsweise ein stationäres, lineares Einspurmodell zugrunde gelegt wird. In einer vorteilhaften Ausgestaltung wird dabei ein Fahrzeugmodell gewählt, welches einen Schätzwert $\hat{\mu}$ für den Fahrbahnreibwert $\mu$, der beispielsweise anhand der gemessenen Querbeschleunigung $a_y$ bestimmt werden kann, berücksichtigt. Damit geht auch das verbleibende Reibwertpotenzial in die Referenzgierrate $\dot{\psi}_{ref}$ ein. Vorzugsweise wird dabei das in der deutschen Offenlegungsschrift DE 195 15 059 A1 beschriebe Fahrzeugmodell zur Bestimmung der Referenzgierrate $\dot{\psi}_{ref}$ verwendet.

Zur Bestimmung des Zusatzlenkwinkelanteils $\Delta\delta_R$ wird ein adaptiver Fahrzustandsregler 420 verwendet, der vorzugsweise als Proportional-Integral-Differenzial-Regler (PID-Regler) ausgebildet ist. Der Zusatzlenkwinkelanteil $\Delta\delta_R$ ergibt sich dabei als Summe aus einem P-Anteil $\Delta\delta_{R,P}$, einem I-Anteil $\Delta\delta_{R,I}$ und einem D-Anteil $\Delta\delta_{R,D}$:

$$\Delta\delta_R = \Delta\delta_{R,P} + \Delta\delta_{R,I} + \Delta\delta_{R,D}. \qquad\qquad (11)$$

Die Regelgröße für den P-Anteil $\Delta\delta_{R,P}$ ist die Gierratenabweichung $\Delta\dot{\psi}$. Für den aus dem P-Anteil resultierenden Zusatzlenkwinkelanteil gilt das Regelgesetz

$$\Delta\delta_{R,P} = K_{FB,P}(v)\cdot\Delta\dot{\psi}. \qquad\qquad (12)$$

Die Gierratenabweichung $\Delta\dot{\psi}$ ist dabei als Differenz zwischen der gemessenen Gierrate $\dot{\psi}$ des Fahrzeugs und der Referenzgierrate $\dot{\psi}_{ref}$ definiert:

$$\Delta\dot{\psi} = \dot{\psi} - \dot{\psi}_{ref}. \qquad\qquad (13)$$

Die Gierrate des Fahrzeugs $\dot{\psi}$ wird direkt mit einem Gierratensensor gemessen, der vorzugsweise mit einem Querbeschleunigungssensor in einen Sensorcluster integriert ist, in welchem sowohl die Gierrate $\dot{\psi}$ sowie auch die Querbeschleunigung $a_y$ des Fahrzeugs gemessen werden. Dabei können im Cluster auch redundante Sensorelemente zum Einsatz kommen, wodurch eine verbesserte Signalüberwachung und Signalplausibilisierung möglich ist.

Der Verstärkungsfaktor $K_{FB,P}(v)$ für die Reglerrückführung der Gierratenabweichung $\Delta\dot{\psi}$ wird über der aktuellen Fahrzeuggeschwindigkeit $v$ adaptiert. Da die Fahrzeuggeschwindigkeit $v$ das Fahrverhalten des Fahrzeugs wesentlich beeinflusst, wird dies in der Reglerverstärkung und somit auch im über den Regler geschlossenen Regelkreis des Fahrzeugs berücksichtigt.

Die Regelgröße für den I-Anteil $\Delta\delta_{R,I}$ des Zusatzlenkwinkelanteils $\Delta\delta_R$ ist eine Gierwinkelabweichung $\Delta\psi$. Für den aus dem I-Anteil resultierenden Zusatzlenkwinkelanteil gilt das Regelgesetz

$$\Delta\delta_{R,I} = K_{FB,I}(v)\cdot\Delta\psi. \qquad (14)$$

Die Gierwinkelabweichung $\Delta\psi$ wird durch Integration der Gierratenabweichung $\Delta\dot\psi$ ermittelt:

$$\Delta\psi = \int \Delta\dot\psi\, dt = \int \left(\dot\psi - \dot\psi_{ref}\right) dt \qquad (15)$$

Die Gierwinkelabweichung $\Delta\psi$ basiert somit auf den gleichen Signalquellen wie die Gierratenabweichung $\Delta\dot\psi$ und wird aus dieser mittels eines Integratorgliedes bestimmt. Es kann jedoch gleichfalls eine Messung des Gierwinkels $\psi$ mittels einer Kreiselbox vorgesehen sein.

Der Verstärkungsfaktor $K_{FB,I}(v)$ für die Reglerrückführung der Gierwinkelabweichung $\Delta\psi$ wird über die Fahrzeuggeschwindigkeit $v$ adaptiert. Da die Fahrzeuggeschwindigkeit $v$ das Fahrverhalten des Fahrzeugs wesentlich beeinflusst, wird dies in der Reglerverstärkung und somit auch im über den Regler geschlossenen Regelkreis des Fahrzeugs berücksichtigt.

Die Regelgröße für den D-Anteil $\Delta\delta_{R,D}$ des Zusatzlenkwinkelanteils $\Delta\delta_R$ ist eine Gierbeschleunigungsabweichung $\Delta\ddot\psi$. Für den aus dem D-Anteil resultierenden Zusatzlenkwinkelanteil gilt das Regelgesetz

$$\Delta\delta_{R,D} = K_{FB,D}(v)\cdot\Delta\ddot\psi. \qquad (16)$$

Die Gierbeschleunigungsabweichung $\Delta\ddot\psi$ wird durch Differenziation der Gierratenabweichung $\Delta\dot\psi$ ermittelt:

$$\Delta\ddot\psi = \frac{d}{dt}\Delta\dot\psi = \frac{d}{dt}\left(\dot\psi - \dot\psi_{ref}\right) \qquad (17)$$

Die Gierbeschleunigungsabweichung $\Delta\ddot\psi$ basiert somit auf den gleichen Signalquellen wie die Gierratenabweichung $\Delta\dot\psi$ und wird aus dieser mittels eines Differenziergliedes bestimmt. Es kann jedoch auf gleichfalls eine Messung der Gierbeschleunigung $\ddot\psi$ mittels eines Gierbeschleunigungssensors vorgesehen sein.

Der Verstärkungsfaktor $K_{FB,D}(v)$ für die Reglerrückführung der Gierbeschleunigungsabweichung $\Delta\ddot\psi$ wird über die Fahrzeuggeschwindigkeit $v$ adaptiert. Da die Fahrzeuggeschwindigkeit $v$ das Fahrverhalten des Fahrzeugs wesentlich beeinflusst, wird dies in der Reglerverstärkung und somit auch im über den Regler geschlossenen Regelkreis des Fahrzeugs berücksichtigt. Eine zu der dargestellten Gierratenregelung analoge Regelung kann ebenfalls zusätzlich für die Querbeschleunigung $a_y$ und/oder den aus mehreren Fahrzustandsgrößen geschätzten Schwimmwinkel $\beta$ des Fahrzeugs vorgenommen werden. Regelgrößen sind dabei eine Abweichung $\Delta a_y$ zwischen der Querbeschleunigung $a_y$ des Fahrzeugs und einer Referenzquerbeschleunigung $a_{y,ref}$ bzw. eine Abweichung $\Delta\beta$ zwischen dem geschätzten Schwimmwinkel $\beta$ des Fahrzeugs und einem Referenzschwimmwinkel $\beta_{ref}$, wobei die Referenzquerbeschleunigung $a_{y,ref}$ sowie der Referenzschwimmwinkel $\beta_{ref}$ beispielsweise durch entsprechende Schwellenwerte vorgegeben werden können, die ebenfalls in einem Fahrzeugreferenzmodell berechnet bestimmt wird.

Bei einer zusätzlichen Berücksichtigung der Querbeschleunigung $a_y$ und/oder des Schwimmwinkels $\beta$ werden, vorzugsweise durch P-Regler oder durch PID-Regler, entsprechende Anteile des Zusatzlenkwinkelanteils $\Delta\delta_R$ in dem Regler 420 ermittelt und nachfolgend einer Arbitrierung unterzogen, wodurch der Regelanteil $\Delta\delta_R$ dann bestimmt wird.

Der Steueranteil $\Delta\delta_Z$ und der Regelanteil $\Delta\delta_R$ werden in einem Addierer addiert, und die sich als Summe der beiden Anteile ergebende Zusatzlenkwinkelstellanforderung $\Delta\delta$ wird an eine Steuereinheit des in den Lenkstrang eingesetzten Aktuators übermittelt und von dem Aktuator eingestellt.

Bei dem Aktuator kann es sich beispielsweise um eine Überlagerungslenkung handelt, bei der ein Planetengetriebe oder ein HarmonicDrive-Getriebe in den Lenkstrang des Fahrzeugs eingesetzt ist, das die Überlagerung der von dem Fahrzeugführer kommandierten Lenkbewegung und einer zusätzlichen Lenkbewegung ermöglicht, die vorzugsweise nach Maßgabe der Zusatzlenkwinkelstellanforderung $\Delta\delta$ ausgeführt wird.

Ferner kann es sich bei dem Aktuator um eine Steer-by-Wire-Lenkung handeln, bei der keine mechanische Verbindung zwischen dem von dem Fahrzeugführer betätigten Lenkrad und den lenkbaren Rädern des Fahrzeugs besteht.

Der Lenkwinkel $\delta_{WHL}$ an den lenkbaren Rädern des Fahrzeugs ergibt sich damit als Summe aus dem von dem Fahrer kommandierten Lenkwinkel $\delta_{DRV}$ und dem Zusatzlenkwinkel $\Delta\delta$ :

$$\delta_{WHL} = \delta_{DRV} + \Delta\delta \qquad\qquad (18)$$

Je nachdem, ob es sich um eine aktive Lenkung an der Vorder- oder Hinterachse des Fahrzeugs handelt, ergeben sich für die einzelnen Lenkwinkelanteile $\Delta\delta_Z$ und $\Delta\delta_R$ unterschiedliche Vorzeichen.

Darüber hinaus kann es in weiteren Ausführungsformen der Erfindung vorgesehen sein, den Zusatzlenkwinkel $\Delta\delta$ nicht unmittelbar an den lenkbaren Rädern des Fahrzeugs einzustellen, sondern in Abhängigkeit von dem Zusatzlenkwinkel $\Delta\delta$ ein Zusatzlenkmoment zu bestimmen, das dem Lenkstrang des Fahrzeugs und insbesondere dem von dem Fahrzeugführer betätigten Lenkrad aufgegeben wird. Die Bestimmung des Zusatzlenkmoments erfolgt dabei in einer weiteren Regelungseinheit der Regelungsanordnung, beispielsweise durch eine Multiplikation des Zusatzlenkwinkels mit einem Verstärkungsfaktor durch einen Lenkmomentenregler, welcher dem Fahrer derart ein Zusatzlenkmoment vorgibt, so dass der Fahrer den Ziellenkwinkel schnell und präzise einstellen kann.

Durch das Zusatzlenkmoment wird der Fahrzeugführer dabei unterstützt, einen Solllenkwinkel einzustellen, der als Summe des aktuellen durch den Fahrzeugführer kommandierten Lenkwinkels $\delta_{DRV}$ und des Zusatzlenkwinkels $\Delta\delta$ gegeben ist. Das Zusatzlenkmoment kann dabei mittels einer elektrischen oder hydraulischen Servolenkung oder ebenfalls mittels einer Steer-by-Wire-Lenkung in den Lenkstrang eingesteuert werden.

Die Bestimmung des zur Stabilisierung benötigten Zusatzlenkwinkels $\Delta\delta$ und das Einstellen des Zusatzlenkwinkels $\Delta\delta$ bzw. des aus diesem ermittelten Zusatzlenkmoments bei einem ASR-Eingriff in einer $\mu$-Split-Situation geschehen dabei viel schneller als ein Durchschnittsfahrer die entsprechende Situation erkennen und per Gegenlenken darauf reagieren kann.

Somit wird das Fahrzeug aufgrund der Erfindung beim Beschleunigen in $\mu$-Split-Situationen und insbesondere beim Anfahren in $\mu$-Split-Situationen einfacher durch den Fahrzeugführer beherrschbar. Die Fahrzeugstabilität wird in diesen Situationen wirkungsvoll erhöht, und insbesondere wird verhindert, dass das Fahrzeug beim Beschleunigen auf einer Fahrbahn mit einem inhomogenen Reibwert seitlich ausbricht oder schiefzieht. Ferner wird das zur Verfügung stehende Seitenkraftpotenzial der Räder des Fahrzeugs erhöht, da die Querkräfte, die aufgrund des Störgiermoments $M_Z$ auf die Räder wirken, durch den Zusatzlenkwinkel $\Delta\delta$ abgebaut werden.

**Patentansprüche**

**1.** Verfahren zum Erhöhen der Stabilität eines Fahrzeugs beim Beschleunigen auf einer Fahrbahn mit einem inhomogenen Reibwert, wobei ein Antriebsrad auf einer Niedrigreibwertseite durch eine Antriebsschlupfregelung mit einer Bremskraft beaufschlagt wird, wobei eine Größe ( $p_{ASR}$ ) ermittelt wird, die der durch die Antriebsschlupfregelung ( ASR ) eingestellten Bremskraft ($F_{B,ASR}$) entspricht,
**dadurch gekennzeichnet,**
**dass** die ermittelte Größe ( $p_{ASR}$ ) zur Bestimmung eines Störgiermoments ( $M_Z$ ) herangezogen wird und dass in Abhängigkeit von dem Störgiermoment ( $M_Z$ ) ein Steueranteil ( $\Delta\delta_Z$ ) eines Zusatzlenkwinkels ( $\Delta\delta$ ) ermittelt wird, wobei es sich bei der ermittelten Größe um einen Bremsdruck ($p_{ASR}$) handelt, der durch die Antriebsschlupfregelung (ASR) in der Radbremse (140) des Antriebsrades (120) auf der Niedrigreibwertseite eingestellt wird und wobei der Steueranteil des Zusatzlenkwinkels ( $\Delta\delta$ ) anhand eines Regelungsgesetzes der Form

$$\Delta\delta_Z = K_M(v)\cdot\hat{M}_Z$$

berechnet wird, wobei $\Delta\delta_Z$ den Steueranteil des Zusatzlenkwinkels ($\Delta\delta$), $K_M$ einen Verstärkungsfaktor, $v$ die Referenzgeschwindigkeit des Fahrzeugs und $\hat{M}_Z$ einen Schätzwert für das Störgiermoment ( $M_Z$ ) bezeichnet.

**2.** Verfahren nach Anspruch 1,
**dadurch gekennzeichnet,**
**dass** der Zusatzlenkwinkel ( $\Delta\delta$ ) an wenigstens einem lenkbaren Rad des Fahrzeugs eingestellt wird.

**3.** Verfahren nach einem der vorangegangenen Ansprüche
**dadurch gekennzeichnet,**
**dass** in Abhängigkeit von dem Zusatzlenkwinkel ( $\Delta\delta$ ) ein Zusatzlenkmoment bestimmt wird und ein Lenkstrang des Fahrzeugs mit dem Zusatzlenkmoment beaufschlagt wird.

**4.** Verfahren nach einem der vorangegangenen Ansprüche,
**dadurch gekennzeichnet,**
**dass** in Abhängigkeit von einer Regelabweichung ( $\Delta\dot{\psi}$, $\Delta\psi$, $\Delta\ddot{\psi}$, $\Delta a_y$, $\Delta\beta$ ) zwischen einer mittels Fahrzeugsensoren gemessenen oder aus Messsignalen von Fahrzeugsensoren berechneten Regelgröße ( $\dot{\psi}$, $\psi$, $\ddot{\psi}$, $a_y$, $\beta$ ) und einer Referenzgröße ( $\dot{\psi}_{ref}$, $\psi_{rej}$, $\ddot{\psi}_{ref}$, $a_{y,ref}$, $\beta_{ref}$ ) ein Regelanteil ( $\Delta\delta_R$ ) des Zusatzlenkwinkels ( $\Delta\delta$ ) ermittelt wird, und dass der Zusatzlenkwinkel ( $\Delta\delta$ ) einer Summe aus dem Regelanteil ( $\Delta\delta_R$ ) und dem Steueranteil ( $\Delta\delta_Z$ ) entspricht.

**5.** Verfahren nach einem der vorangegangenen Ansprüche,
**dadurch gekennzeichnet,**
**dass** der Regelanteil ( $\Delta\delta_R$ ) des Zusatzlenkwinkels ( $\Delta\delta$ ) in Abhängigkeit von einer Gierratenabweichung ( $\Delta\dot{\psi}$ ) zwischen der Gierrate ( $\dot{\psi}$ ) des Fahrzeugs und einer Referenzgierrate ( $\dot{\psi}_{ref}$ ) des Fahrzeugs bestimmt wird, wobei die Referenzgierrate ( $\dot{\psi}_{ref}$ ) anhand wenigstens einer von dem Fahrzeugführer vorgegebenen Größe ( $\delta_{DRV}$ ) in einem Fahrzeugmodell bestimmt wird.

**6.** Verfahren nach einem der vorangegangenen Ansprüche,
**dadurch gekennzeichnet,**
**dass** der Regelanteil des Zusatzlenkwinkels ( $\Delta\delta$ ) anhand eines Regelungsgesetzes der Form

$$\Delta\delta_R = K_{FB,P}(v)\cdot\Delta\dot{\psi} + K_{FB,I}(v)\cdot\Delta\psi + K_{FB,D}(v)\cdot\Delta\ddot{\psi}$$

bestimmt wird, wobei $\Delta\delta_R$ den Regelanteil des Zusatzlenkwinkels, $K_{FB,P}$, $K_{FB,I}$ und $K_{FB,D}$ jeweils einen Verstärkungsfaktor, $v$ die Referenzgeschwindigkeit des Fahrzeugs, $\Delta\dot{\psi}$ die Gierratenabweichung, $\Delta\psi$ eine Gierwinkelabweichung und $\Delta\ddot{\psi}$ eine Gierbeschleunigungsabweichung bezeichnet.

**7.** Verfahren nach einem der vorangegangenen Ansprüche,
**dadurch gekennzeichnet,**
**dass** der Regelanteil ( $\Delta\delta_R$ ) des Zusatzlenkwinkels ( $\Delta\delta$ ) in Abhängigkeit von einer Schwimmwinkelabweichung ( $\Delta\beta$ ) zwischen einem geschätzten Schwimmwinkel ( $\beta$ ) des Fahrzeugs und einem Referenzschwimmwinkel ( $\beta_{ref}$ ) ermittelt wird, wobei der Referenzschwimmwinkel ( $\beta_{ref}$ ) durch einen Schwellenwert vorgegeben wird.

**8.** Verfahren nach einem der vorangegangenen Ansprüche,
**dadurch gekennzeichnet,**
**dass** der Regelanteil ( $\Delta\delta_R$ ) des Zusatzlenkwinkels ( $\Delta\delta$ ) in Abhängigkeit von einer Querbeschleunigungsabweichung ( $\Delta a_y$ ) zwischen einer gemessenen Querbeschleunigung ( $a_y$ ) des Fahrzeugs und einer Referenzquerbeschleunigung ( $a_{y,ref}$ ) ermittelt wird, wobei die Referenzquerbeschleunigung ( $a_{y,ref}$ ) durch einen Schwellenwert vorgegeben wird.

**9.** Verfahren nach einem der vorangegangenen Ansprüche,
**dadurch gekennzeichnet,**
**dass** der Zusatzlenkwinkel ( $\Delta\delta$ ) mittels einer Steer-by-Wire-Lenkung an dem lenkbaren Rad eingestellt wird.

**10.** Verfahren nach einem der vorangegangenen Ansprüche,
**dadurch gekennzeichnet,**
**dass** der Zusatzlenkwinkel ( $\Delta\delta$ ) mittels einer Überlagerungslenkung an dem lenkbaren Rad eingestellt wird.

**11.** Verfahren nach einem der vorangegangenen Ansprüche,
**dadurch gekennzeichnet,**
**dass** zusätzlich zu der von dem Fahrzeugführer kommandierten Lenkbewegung eine weitere Lenkbewegung nach Maßgabe des Zusatzlenkwinkels ( $\Delta\delta$ ) ausgeführt wird.

**12.** Verfahren nach einem der vorangegangenen Ansprüche,
**dadurch gekennzeichnet,**
**dass** das Zusatzlenkmoment mittels einer elektrischen oder hydraulischen Servolenkung eingestellt wird.

**13.** Verfahren nach einem der vorangegangenen Ansprüche,
**dadurch gekennzeichnet,**

**dass** das Zusatzlenkmoment mittels einer Steer-by-Wire-Lenkung eingestellt wird.

14. Anordnung zum Erhöhen der Stabilität eines Fahrzeugs bei einem Beschleunigen auf einer Fahrbahn mit einem inhomogenen Reibwert, umfassend ein Regelungsmittel zur Durchführung einer Antriebsschlupfregelung, welches eine Beaufschlagung eines Antriebsrads auf einer Niedrigreibwertseite mit einer Bremskraft steuert, welche eine Ermittlungseinheit zum Ermitteln einer Größe ( $p_{ASR}$ ) enthält, wobei die Größe ( $p_{ASR}$ ) der durch das Regelungsmittel eingestellten Bremskraft ( $F_{B,ASR}$ ) entspricht,
**dadurch gekennzeichnet,**
**dass** sie eine Schätzeinheit zum Schätzen ( $p_{ASR}$ ) eines Störgiermoments ( $M_Z$ ) unter Heranziehung der ermittelten Größe ( $p_{ASR}$ ) enthält und dass sie eine Steuerungseinheit zum Ermitteln eines Steueranteils ( $\Delta\delta_Z$ ) eines Zusatzlenkwinkels ( $\Delta\delta$ ) in Abhängigkeit von dem geschätzten Störgiermoment ( $M_Z$ ) enthält, wobei der Steueranteil des Zusatzlenkwinkels ( $\Delta\delta$ ) anhand eines Regelungsgesetzes der Form

$$\Delta\delta_Z = K_M\left(v\right)\cdot \hat{M}_Z$$

berechnet wird, wobei $\Delta\delta_Z$ den Steueranteil des Zusatzlenkwinkels ( $\Delta\delta$ ), $K_M$ einen Verstärkungsfaktor, $v$ die Referenzgeschwindigkeit des Fahrzeugs und $\hat{M}_Z$ einen Schätzwert für das Störgiermoment ( $M_Z$ ) bezeichnet.

**Claims**

1. Method for increasing the stability of a vehicle when accelerating on an underlying surface with a non-homogenous coefficient of friction, wherein a braking force is applied to a drive wheel on a low-coefficient-of-friction-value side by a traction controller, wherein a variable ($p_{TC}$), which corresponds to the braking force ($F_{B,TC}$) set by the traction controller ($TC$), is determined,
**characterized**
**in that** the determined variable ($p_{TC}$) is used to determine an interference yaw moment ($M_Z$), and in that an open-loop control component ($\Delta\delta_Z$) of an additional steering angle ($\Delta\delta$) is determined as a function of the interference yaw moment ($M_Z$), wherein the determined variable is a brake pressure ($p_{TC}$) which is set on the low-coefficient-of-friction-value side by the traction controller ($TC$) in the wheel brake (140) of the drive wheel (120) and wherein the open-loop control component of the additional steering angle ($\Delta\delta$) is calculated on the basis of a control rule with the form

$$\Delta\delta_Z = K_M(v)\cdot \hat{M}_Z$$

wherein $\Delta\delta_Z$ denotes the open-loop control component for the additional steering angle ($\Delta\delta$), $K_M$ denotes a boosting factor, $v$ denotes the reference speed of the vehicle and $\hat{M}_Z$ denotes an estimated value for the interference yaw moment ($M_Z$).

2. Method according to Claim 1,
**characterized**
**in that** the additional steering angle ($\Delta\delta$) is set at the at least one steerable wheel of the vehicle.

3. Method according to one of preceding claims,
**characterized**
**in that** an additional steering torque is determined as a function of the additional steering angle ($\Delta\delta$) and the additional steering torque is applied to a steering train of the vehicle.

4. Method according to one of the preceding claims,
**characterized**
**in that** a closed-loop control component ($\Delta\delta_R$) of the additional steering angle ($\Delta\delta$) is determined as a function of a control error ($\Delta\dot{\psi}$, $\Delta\psi$, $\Delta\ddot{\psi}$, $\Delta a_y$, $\Delta\beta$), between a closed-loop control variable ($\dot{\psi}$, $\psi$, $\ddot{\psi}$, $a_y$, $\beta$), which is measured by means of vehicle sensors or calculated from measurement signals of vehicle sensors, and a reference variable

($\dot{\psi}_{ref}$, $\psi_{ref}$, $\ddot{\psi}_{ref}$, $a_{y,ref}$, $\beta_{ref}$), and in that the additional steering angle ($\Delta\delta$) corresponds to a sum of the closed-loop control component ($\Delta\delta_R$) and the open-loop control component ($\Delta\delta_Z$).

5. Method according to one of the preceding claims,
   **characterized**
   **in that** the closed-loop control component ($\Delta\delta_R$) of the additional steering angle ($\Delta\delta$) is determined as a function of a yaw rate deviation ($\Delta\dot{\psi}$) between the yaw rate ($\Delta\dot{\psi}$) of the vehicle and a reference yaw rate ($\dot{\psi}_{ref}$) of the vehicle, wherein the reference yaw rate ($\dot{\psi}_{ref}$) is determined by means of at least one variable ($\delta_{ELB}$), predefined by the vehicle driver, in a vehicle model.

6. Method according to one of the preceding claims,
   **characterized**
   **in that** the closed-loop control component of the additional steering angle ($\Delta\delta$) is determined by means of a control rule with the form

$$\Delta\delta_R \;=\; K_{FB,P}(v)\cdot\Delta\dot{\psi} + K_{FB,I}(v)\cdot\Delta\psi + K_{FB,D}(v)\cdot\Delta\ddot{\psi} \;,$$

   where $\Delta\delta_R$ denotes the closed-loop control component of the additional steering angle, $K_{FB,P}$, $K_{FB,I}$ and $K_{FB,D}$ each denote a boosting factor, $v$ denotes the reference speed of the vehicle, $\Delta\dot{\psi}$ denotes a yaw rate deviation, $\Delta\psi$ denotes a yaw angle deviation and $\Delta\ddot{\psi}$ denotes a yaw acceleration deviation.

7. Method according to one of the preceding claims,
   **characterized**
   **in that** the closed-loop control component ($\Delta\delta_R$) of the additional steering angle ($\Delta\delta$) is predefined as a function of a side slip angle deviation ($\Delta\beta$) between an estimated side slip angle ($\beta$) of the vehicle and a reference side slip angle ($\beta_{ref}$), wherein the reference side slip angle ($\beta_{ref}$) is predefined by means of a threshold value.

8. Method according to one of the preceding claims,
   **characterized**
   **in that** the closed-loop control component ($\Delta\delta_R$) of the additional steering angle ($\Delta\delta$) is determined as a function of a lateral acceleration deviation ($\Delta a_y$) between a measured lateral acceleration ($a_y$) of the vehicle and a reference lateral acceleration ($a_{y,ref}$), wherein the reference lateral acceleration ($a_{y,ref}$) is predefined by means of a threshold value.

9. Method according to one of the preceding claims,
   **characterized**
   **in that** the additional steering angle ($\Delta\delta$) is set at the steerable wheel by means of a steer-by-wire steering system.

10. Method according to one of the preceding claims,
    **characterized,**
    **in that** the additional steering angle ($\Delta\delta$) is set at the steerable wheel by means of a superimposition steering system.

11. Method according to one of the preceding claims,
    **characterized**
    **in that**, in addition to the steering movement ordered by the vehicle driver, a further steering movement is carried out in accordance with the additional steering angle ($\Delta\delta$).

12. Method according to one of the preceding claims,
    **characterized**
    **in that** the additional steering torque is set by means of an electrical or hydraulic power steering system.

13. Method according to one of the preceding claims,
    **characterized**
    **in that** the additional steering torque is set by means of a steer-by-wire steering system.

14. Arrangement for increasing the stability of a vehicle when accelerating on an underlying surface with a non-homogenous coefficient of friction, comprising a closed-loop control means for carrying out a traction control process, which closed-loop control means controls application of a braking force to a drive wheel on a low-coefficient-of-friction-value side, which arrangement contains a determining unit for determining a variable ($p_{TC}$), wherein the variable ($p_{TC}$) corresponds to the braking force ($F_{B,TC}$) which is set by the closed-loop control means, **characterized in that** it contains an estimation unit for estimating an interference yaw moment ($M_Z$) using the determined variable ($p_{TC}$), and in that it contains a control unit for determining an open-loop control component ($\Delta\delta_Z$) of an additional steering angle ($\Delta\delta$) as a function of the estimated interference yaw moment ($M_Z$), wherein the open-loop control component of the additional steering angle ($\Delta\delta$) is calculated on the basis of a control rule with the form

$$\Delta\delta_Z \;=\; K_M(v)\cdot\hat{M}_Z \, ,$$

wherein $\Delta\delta_Z$ denotes the open-loop control component for additional steering angle ($\Delta\delta$), $K_M$ denotes a boosting factor, $v$ denotes the reference speed of the vehicle and $\hat{M}_Z$ denotes an estimated value for the interference yaw moment ($M_Z$).

## Revendications

1.  Procédé pour renforcer la tenue de route d'un véhicule lors de l'accélération sur une chaussée présentant un coefficient de frottement non homogène, dans lequel on applique une force de freinage à une roue motrice sur un côté à faible coefficient de frottement au moyen d'un système d'anti-patinage à l'accélération, dans lequel on détermine une grandeur ($p_{ASR}$) qui correspond à la force de freinage ($F_{B,ASR}$) réglée par le système d'anti-patinage à l'accélération (ASR), **caractérisé en ce que** l'on utilise la grandeur déterminée ($p_{ASR}$) pour la détermination d'un couple de lacet parasite ($M_Z$) et **en ce que** l'on détermine, en fonction du couple de lacet parasite ($M_Z$), une fraction de commande ($\Delta\delta_Z$) d'un angle de braquage supplémentaire ($\Delta\delta$), dans lequel la grandeur déterminée est une pression de freinage ($p_{ASR}$), qui est réglée par le système d'anti-patinage à l'accélération (ASR) dans le frein de roue (140) de la roue motrice (120) sur le côté à faible coefficient de frottement et dans lequel on calcule la fraction de commande de l'angle de braquage supplémentaire ($\Delta\delta$) au moyen d'une loi de régulation de la forme

$$\Delta\delta_Z = K_M(v)\cdot\hat{M}_Z$$

dans laquelle $\Delta\delta_Z$ représente la fraction de commande de l'angle de braquage supplémentaire ($\Delta\delta$), $K_M$ un facteur d'amplification, $v$ la vitesse de référence du véhicule et $\hat{M}_Z$ une valeur estimée pour le couple de lacet parasite ($M_Z$).

2.  Procédé selon la revendication 1, **caractérisé en ce que** l'on règle l'angle de braquage supplémentaire ($\Delta\delta$) à au moins une roue orientable du véhicule.

3.  Procédé selon l'une quelconque des revendications précédentes, **caractérisé en ce que** l'on détermine un couple de braquage supplémentaire en fonction de l'angle de braquage supplémentaire ($\Delta\delta$) et on applique le couple de braquage supplémentaire à une chaîne de direction du véhicule.

4.  Procédé selon l'une quelconque des revendications précédentes, **caractérisé en ce que** l'on détermine une fraction de régulation ($\Delta\delta_R$) de l'angle de braquage supplémentaire ($\Delta\delta$) en fonction d'un écart de réglage ($\Delta\dot{\psi},\Delta\psi,\Delta\ddot{\psi},\Delta a_y,\Delta\beta$) entre une grandeur de réglage ($\dot{\psi},\psi,\ddot{\psi},a_y,\beta$) mesurée au moyen de détecteurs du véhicule ou calculée à partir de signaux de mesure de détecteurs du véhicule et une grandeur de référence ($\dot{\psi}_{ref},\psi_{ref},\ddot{\psi}_{ref},a_{y,ref},\beta_{ref}$), et **en ce que** l'angle de braquage supplémentaire ($\Delta\delta$) correspond à une somme de la fraction de réglage ($\Delta\delta_R$) et de la fraction de commande ($\Delta\delta_Z$).

5.  Procédé selon l'une quelconque des revendications précédentes, **caractérisé en ce que** l'on détermine la fraction de réglage ($\Delta\delta_R$) de l'angle de braquage supplémentaire ($\Delta\delta$) en fonction d'un écart de taux de lacet ($\Delta\dot{\psi}$) entre le taux de lacet ($\dot{\psi}$) du véhicule et un taux de lacet ($\dot{\psi}_{ref}$) du véhicule, dans lequel on détermine le taux de lacet de référence ($\dot{\psi}_{ref}$) à l'aide d'au moins une grandeur ($\delta_{DRV}$) prédéterminée par le conducteur du véhicule dans un modèle du véhicule.

6. Procédé selon l'une quelconque des revendications précédentes, **caractérisé en ce que** l'on détermine la fraction de réglage de l'angle de braquage supplémentaire ($\Delta\delta$) à l'aide d'une loi de régulation de la forme

$$\Delta\delta_R = K_{FB,P}(v) \cdot \Delta\dot{\psi} + K_{FB,I}(v) \cdot \Delta\psi + K_{FB,D}(v) \cdot \Delta\ddot{\psi}$$

dans laquelle $\Delta\delta_R$ représente la fraction de réglage de l'angle de braquage supplémentaire, $K_{FB,P}$, $K_{FB,I}$ et $K_{FB,D}$ respectivement un facteur d'amplification, $v$ la vitesse de référence du véhicule, $\Delta\dot{\psi}$ un écart de taux de lacet, $\Delta\psi$ un écart d'angle de lacet et $\Delta\ddot{\psi}$ un écart d'accélération de lacet.

7. Procédé selon l'une quelconque des revendications précédentes, **caractérisé en ce que** l'on détermine la fraction de réglage ($\Delta\delta_R$) de l'angle de braquage supplémentaire ($\Delta\delta$) en fonction d'un écart d'angle de flottement ($\Delta\beta$) entre un angle de flottement estimé ($\beta$) du véhicule et un angle de flottement de référence ($\beta_{ref}$), dans lequel l'angle de flottement de référence ($\beta_{ref}$) est prédéterminé par une valeur de seuil.

8. Procédé selon l'une quelconque des revendications précédentes, **caractérisé en ce que** l'on détermine la fraction de réglage ($\Delta\delta_R$) de l'angle de braquage supplémentaire ($\Delta\delta$) en fonction d'un écart d'accélération transversale ($\Delta a_y$) entre une accélération transversale mesurée ($a_y$) du véhicule et une accélération transversale de référence ($a_{y,ref}$), dans lequel l'accélération transversale de référence ($a_{y,ref}$) est prédéterminée par une valeur de seuil.

9. Procédé selon l'une quelconque des revendications précédentes, **caractérisé en ce que** l'on règle l'angle de braquage supplémentaire ($\Delta\delta$) au moyen d'une direction Steer-by-Wire à la roue orientable.

10. Procédé selon l'une quelconque des revendications précédentes, **caractérisé en ce que** l'on règle l'angle de braquage supplémentaire ($\Delta\delta$) au moyen d'une direction prioritaire à la roue orientable.

11. Procédé selon l'une quelconque des revendications précédentes, **caractérisé en ce que** l'on effectue un autre mouvement de direction selon l'indication de l'angle de braquage supplémentaire ($\Delta\delta$) en plus du mouvement de direction commandé par le conducteur du véhicule.

12. Procédé selon l'une quelconque des revendications précédentes, **caractérisé en ce que** l'on règle le couple de direction supplémentaire au moyen d'une direction asservie électrique ou hydraulique.

13. Procédé selon l'une quelconque des revendications précédentes, **caractérisé en ce que** l'on règle le couple de direction supplémentaire au moyen d'une direction Steer-by-Wire.

14. Dispositif pour renforcer la tenue de route d'un véhicule lors d'une accélération sur une chaussée présentant un coefficient de frottement non homogène, comprenant un moyen de régulation pour l'exécution d'un système d'anti-patinage à l'accélération, qui commande l'application d'une force de freinage à une roue motrice sur un côté à faible coefficient de frottement, qui contient une unité de détermination pour déterminer une grandeur ($p_{ASR}$), dans lequel la grandeur ($p_{ASR}$) correspond à la force de freinage ($F_{B,ASR}$) réglée par le moyen de régulation, **caractérisé en ce qu'**il comprend une unité d'estimation pour estimer ($p_{ASR}$) un couple de lacet parasite ($M_Z$) en utilisant la grandeur déterminée ($p_{ASR}$) et **en ce qu'**il comprend une unité de commande pour déterminer une fraction de commande ($\Delta\delta_Z$) d'un angle de braquage supplémentaire ($\Delta\delta$) en fonction du couple de lacet parasite estimé ($M_Z$), dans lequel on calcule la fraction de commande de l'angle de braquage supplémentaire ($\Delta\delta$) à l'aide d'une loi de régulation de la forme

$$\Delta\delta_Z = K_M(v) \cdot \hat{M}_Z$$

dans laquelle $\Delta\delta_Z$ représente la fraction de commande de l'angle de braquage supplémentaire ($\Delta\delta$), $K_M$ un facteur d'amplification, $v$ la vitesse de référence du véhicule, et $\hat{M}_Z$ une valeur estimée pour le couple de lacet parasite ($M_Z$).

**Fig. 1a**

**Fig. 1b**

Fig. 2

Fig. 3

**Fig. 4**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3916354 A1
- DE 19515059 A1